(19) Europäisches Patentamt
European Patent Office
Office européen des brevets

(11) **EP 2 639 606 A2**

(12) **EUROPEAN PATENT APPLICATION**

(43) Date of publication:
**18.09.2013 Bulletin 2013/38**

(51) Int Cl.:
***G02B 6/028*** *(2006.01)*

(21) Application number: **13158647.1**

(22) Date of filing: **11.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **13.03.2012 US 201261610123 P**

(71) Applicant: **Corning Cable Systems LLC**
**Hickory NC 28602 (US)**

(72) Inventors:
• **Li, Ming-Jun**
**Horseheads, NY New York 14845 (US)**
• **Peng, Gaozhu**
**Horseheads, NY New York 14845 (US)**
• **Saravanos, Constantine**
**Highland Village, TX Texas 75077 (US)**

(74) Representative: **Sturm, Christoph**
**Quermann Sturm Weilnau**
**Patentanwälte**
**Unter den Eichen 7**
**65195 Wiesbaden (DE)**

(54) **Gradient-index multimode optical fibers for optical fiber connectors**

(57)    A gradient-index multimode optical fiber for use as a stub fiber in an optical fiber connector is disclosed. The fiber is configured to have a minimum group index difference to minimize the adverse effects of multipath interference that can arise in a short, single-mode stub fiber that has a large group index difference. The fiber is also configured to have a mode-field diameter that is substantially the same as that of single-mode optical fibers used as stub fibers. An optical fiber connector that uses the fiber as a stub fiber is also disclosed.

*FIG. 9*

EP 2 639 606 A2

**Description**

**RELATED APPLICATIONS**

This application claims the benefit of priority under 35 U.S.C. § 119 of U.S. Provisional Application Serial No. 61/610,123 filed on March 13, 2012 the content of which is relied upon and incorporated by reference in its entirety.

**FIELD**

The present disclosure relates to optical fibers and optical fiber connectors, and in particular relates to gradient-index multimode optical fibers for optical fiber connectors.

**BACKGROUND**

Optical fiber connectors are used in a variety of telecommunications applications to connect one optical fiber to another, or to connect an optical fiber to a telecommunications device. Certain optical fiber connectors include a short section of single-mode optical fiber (SMF) called a stub fiber that interfaces with a field optical fiber within the connector. When a connector is operably connected (mated) to another connector, the stub fiber resides between the field fiber of its own connector and the stub fiber of the mating connector.

When all the optical fibers are aligned and otherwise matched in size and configuration, the light travels in the field and stub fibers in the lowest or fundamental mode, namely the $LP_{01}$ mode. However, a misalignment, a mismatch in the mode-field diameter (MFD) of the fibers, or a combination of these and other factors can cause light to travel in higher-order modes, such as the $LP_{11}$ mode for a short distance even though the fibers are SMFs. Thus, though an optical fiber may be designed to be an SMF, there are circumstances under which they operate as multimode optical fibers for short distances (<5 cm).

Coherent light traveling in different guided modes takes different optical paths and can cause multi-path interference (MPI). MPI can cause light transmitted through the connector to have significant time-dependent fluctuations that are exacerbated by the use of off-the-shelf SMFs designed for long-haul telecommunications applications. MPI and the attendant power fluctuations are undesirable and degrade the performance of the telecommunications system in which the optical fiber connector is used.

**SUMMARY**

Gradient- index (also called graded- index) multimode optical fibers suitable for use in optical fiber connectors as stub fibers are disclosed herein. The gradient- index multimode optical fibers have a fundamental mode ($LP_{01}$) that substantially matches the mode field diameter of an SMF to reduce or minimize connector loss. In addition, the group index difference (i.e., the group delay) among the different guided modes is minimized to reduce MPI.

An aspect of the disclosure is a gradient-index, multimode optical fiber for use in an optical fiber connector having an operating wavelength $\lambda$. The optical fiber includes a core having a radius $r_0$, with a cladding immediately surrounding the core. The core and cladding supporting a fundamental mode and at least one higher-order mode, the core and cladding defining a mode-field diameter $MFD_{MM}$ and a relative refractive index profile $\Delta$, wherein $\Delta$ is defined by the relationship:

$$\Delta = \Delta_0 \left[ 1 - \left( \frac{r}{r_0} \right)^{\alpha} \right],$$

where $r$ is a radial coordinate, $\Delta_0$ is a maximum relative refractive index at $r = 0$, and $\alpha$ is a profile parameter. Moreover, the core radius $r_0$ is in the range from 6 $\mu$m to 20 $\mu$m, $\Delta_0$ is in the range from 0.4% to 2.5%, $\alpha$ is in the range from 1.9 and 4.1, and the mode-field diameter $MFD_{MM}$ is between 8.2 $\mu$m and 9.7 $\mu$m when the operating wavelength of $\lambda$ = 1310 nm and is between 9.2 $\mu$m and 10.9 $\mu$m when the operating wavelength $\lambda$ = 1550 nm.

Another aspect of the disclosure is a gradient-index, multimode optical fiber for use in an optical fiber connector having an operating wavelength $\lambda$ and a single-mode optical fiber (SMF) that has a mode-field diameter $MFD_{SM}$ and a first group index difference $\Delta ng_{SM}$. The gradient-index, multimode optical fiber includes a gradient-index core having a radius $r_0$ and a relative refractive index profile $\Delta$ with a maximum relative refractive index $\Delta_0$, and a cladding immediately surrounding the core. The cladding has a constant relative refractive index profile, and the core and cladding support multiple guided modes. The optical fiber also has a mode-field diameter $MFD_{MM}$ that is substantially the same as the SMF mode-field diameter $MFD_{SM}$, and a multimode group index difference $\Delta n_g$ such that the ratio $\Delta n g_{SM}/\Delta n_g$ satisfies

$$2 \leq \Delta n g_{SM}/\Delta n_g \leq 300.$$

Another aspect of the disclosure is an optical fiber connector. The connector includes a multimode stub fiber having a first end and that is operably supported by a first alignment member. The multimode stub fiber consists of a length L of the multimode optical fiber as described immediately above and as also described in more detail below. The connector also has a single-mode field optical fiber having a second end and that is operably supported by a second alignment member relative to the first alignment member such that the respective first and second ends of the multimode stub fiber and the single-mode field optical fiber are operably aligned and interfaced.

Another aspect of the disclosure is an optical fiber connector. The connector includes a single-mode field optical fiber having an end and a mode-field diameter $MFD_{SM}$ and a group index difference $\Delta n g_{SM}$. The connector also includes a first alignment member that operably supports the field optical fiber, a stub fiber having an end, and a second alignment member that operably supports the stub fiber so that the stub and field optical fiber ends are aligned and interfaced. The stub fiber includes of a length of a multimode optical fiber that comprises: a) a gradient-index core having a radius $r_0$ and a refractive index profile $\Delta$ with a maximum relative refractive index $\Delta_0$; b) a cladding immediately surrounding the core, the cladding having a constant relative refractive index profile, wherein the core and cladding support multiple guided modes; c) a mode-field diameter $MFD_{MM}$ that is substantially the same as the mode-field diameter $MFD_{SM}$ of the field optical fiber; and d) a multimode group index difference $\Delta n_g$ wherein $2 \leq \Delta n g_{SM}/\Delta n_g \leq 300$.

Another aspect of the disclosure is a gradient-index multimode stub fiber for use in an optical fiber connector at an operating wavelength and that has a single-mode field optical fiber with a group index difference $\Delta n g_{SM}$ and a mode-field diameter. The multimode stub fiber has a core having a radius $r_0$ and a relative refractive index $\Delta$ with an $\alpha$ parameter in the range from 1.9 to 4.1, and a cladding immediately surrounding the core. The cladding has a constant relative refractive index. The core and cladding are configured to support multiple guided modes while having a group index difference $\Delta n_g$ that satisfies $2 \leq \Delta n g_{SM}/\Delta n_g \leq 300$, and a mode-field diameter $MFD_{MM}$ that satisfies $0.9 \leq MFD_{MM}/MFD_{SM} \leq 1.1$ at operating wavelengths $\lambda$ of 1310 nm and 1550 nm.

Another aspect of the disclosure is an optical fiber connector that utilizes the stub fiber described immediately above. The connector has a first alignment member that operably supports the stub fiber, with the stub fiber having an end. The connector also includes a second alignment member that operably supports the field optical fiber such that the respective ends of the stub fiber and the single-mode field optical fiber are operably aligned and interfaced.

These and other aspects of the disclosure will be further understood and appreciated by those skilled in the art by reference to the following specification, claims and appended drawings.

## BRIEF DESCRIPTION OF THE DRAWINGS

A more complete understanding of the present disclosure can be had by reference to the following Detailed Description when taken in conjunction with the accompanying drawings, where:

FIG. 1 is a schematic cross-sectional view of an example prior art optical fiber connector that employs a single-mode stub fiber;

FIG. 2 is a close-up side view of first and second stub fibers and a field fiber in a misaligned configuration that can arise when two optical fiber connectors like those in FIG. 1 are operably mated;

FIG. 3 is a plot of the operating wavelength $\lambda$ (microns) versus transmission (dB) and shows an example transmission efficiency curve for an example conventional stub fiber, with the peak-to-peak wavelength spacing $\Delta\lambda$ of about 32 nm shown in the plot;

FIG. 4 shows a cross-sectional view of an example gradient-index multimode optical fiber according to the disclosure, along with the relative refractive index profile $\Delta$;

FIG. 5 is a plot of the relative refractive index profile $\Delta$ as a function of radius r for three Design Examples DE 1 through DE 3 of the gradient-index multimode optical fiber according to the disclosure;

FIG. 6 plots the group index difference $\Delta n_g$ versus the effective index $n_{eff}$ and shows the group index difference at both 1310 nm and 1550 nm for a first Design Example;

FIG. 7 is the same plot as FIG. 6 but for a second Design Example;

FIGS. 8A and 8B are similar to FIGS. 6 and 7, but plot the group index difference $\Delta n_g$ versus the effective index $n_{eff}$ for operating wavelengths of 1310 nm and 1550 nm, respectively;

FIG. 9 is a plot similar to the plot of FIG. 4 for four additional Design Examples DE 4 through DE 7 of the gradient-index multimode optical fiber according to the disclosure; and

FIG. 10 is similar to FIG. 1 and shows an example of an optical fiber connector that uses the multimode gradient-index optical fiber of the present disclosure as the stub fiber.

**DETAILED DESCRIPTION**

Reference is now made in detail to various embodiments of the disclosure, examples of which are illustrated in the accompanying drawings. Whenever possible, the same or like reference numbers and symbols are used throughout the drawings to refer to the same or like parts. The drawings are not necessarily to scale, and one skilled in the art will recognize where the drawings have been simplified to illustrate the key aspects of the disclosure.

The claims as set forth below are incorporated into and constitute part of this Detailed Description.

The entire disclosure of any publication or patent document mentioned herein is incorporated by reference.

The symbol $\mu$m and the word "micron" are used interchangeably herein.

Mode field diameter or MFD is a measure of the spot size or beam width of light propagating in an optical fiber. The MFD is a function of the source wavelength, fiber core radius r and fiber refractive index profile. In an example, the mode field diameter MFD can be measured using the Peterman II method, where MFD = 2w, and

$$w^2 = 2 \frac{\int_0^\infty E^2 r dr}{\int_0^\infty (dE/dr)^2} r dr \,,$$

where E is the electric field distribution in the optical fiber and $r$ is the radial coordinate of the optical fiber. The MFD of a single-mode optical fiber is denoted herein as $MFD_{SM}$, while the MFD of the multimode optical fiber 100 of the present disclosure as described below is denoted $MFD_{MM}$.

The parameter $\alpha$ (also called the "profile parameter") as used herein relates to the relative refractive index $\Delta$, which is in units of "%," where r is the radius (radial coordinate), and which is defined by:

$$\Delta = \Delta_0 \left[ 1 - \left( \frac{r}{r_0} \right)^\alpha \right],$$

where $\Delta_0$ is the maximum relative refractive index, $r_0$ is the radius of the core, $r$ is the radial coordinate, e.g., in the range $0 \leq r \leq r_F$, wherein $r = 0$ is the initial radial point of the profile, $r_F$ is the outer diameter of the cladding (with the inner cladding radius being $r_0$), and $\alpha$ is the aforementioned profile parameter and is a real number exponent. For a step index profile, $\alpha$ is greater than or equal to 10. For a gradient-index profile, $\alpha$ is less than 10. The term "substantially parabolic" can be used to describe substantially parabolically shaped relative refractive index profiles with $\alpha = 2$, as well as profiles in which the curvature of the relative refractive index of the core varies slightly from $\alpha = 2$. It is noted here that different forms for the core radius $r_0$ and maximum relative refractive index $\Delta_0$ can be used without affecting the fundamental definition of $\Delta$. An example fiber 100 as discussed below has a substantially parabolic relative refractive index profile.

The limits on any ranges cited herein are considered to be inclusive and thus to lie within the range unless otherwise specified.

The term "dopant" as used herein refers to a substance that raises the relative refractive index of glass relative to pure undoped $SiO_2$. One or more other substances that are not dopants may be present in a region of an optical fiber (e.g., the core) having a positive relative refractive index $\Delta$.

The term "mode" is short for guided mode. A single-mode fiber as the term is used herein means an optical fiber designed to support only a single mode over a substantial length of the optical fiber (e.g., at least several meters) but that under certain circumstances can support multiple modes over short distances (e.g., tens of millimeters). A multimode optical fiber means an optical fiber designed to support the fundamental mode and at least one higher-order mode over a substantial length of the optical fiber.

The cutoff wavelength $\lambda_C$ of a mode is the minimum wavelength beyond which a mode ceases to propagate in the optical fiber. The cutoff wavelength of a single-mode fiber is the minimum wavelength at which an optical fiber will support only one propagating mode. The cutoff wavelength $\lambda_C$ of a single-mode fiber corresponds to the highest cutoff wavelength among the higher-order modes. Typically the highest cutoff wavelength $\lambda_C$ corresponds to the cutoff wavelength of the $LP_{11}$ mode. A mathematical definition can be found in Single Mode Fiber Optics, Jeunhomme, pp. 39-44, Marcel Dekker, New York, 1990, wherein the theoretical fiber cutoff is described as the wavelength at which the mode propagation constant becomes equal to the plane wave propagation constant in the outer cladding. This theoretical wavelength is appropriate for an infinitely long, perfectly straight fiber that has no diameter variations.

The operating wavelength $\lambda$ is the wavelength at which a particular optical fiber operates, with example first and second operating wavelengths being 1310 nm and 1550 nm, which are commonly used in telecommunications systems that include optical fiber connectors of the type disclosed herein.

The phrase "SMF-28e fiber" as used hereinbelow refers to a particular type of single-mode optical fiber made by Coming, Inc., of Coming, New York. The term "SMF-28e" is a registered trademark of Coming, Inc.

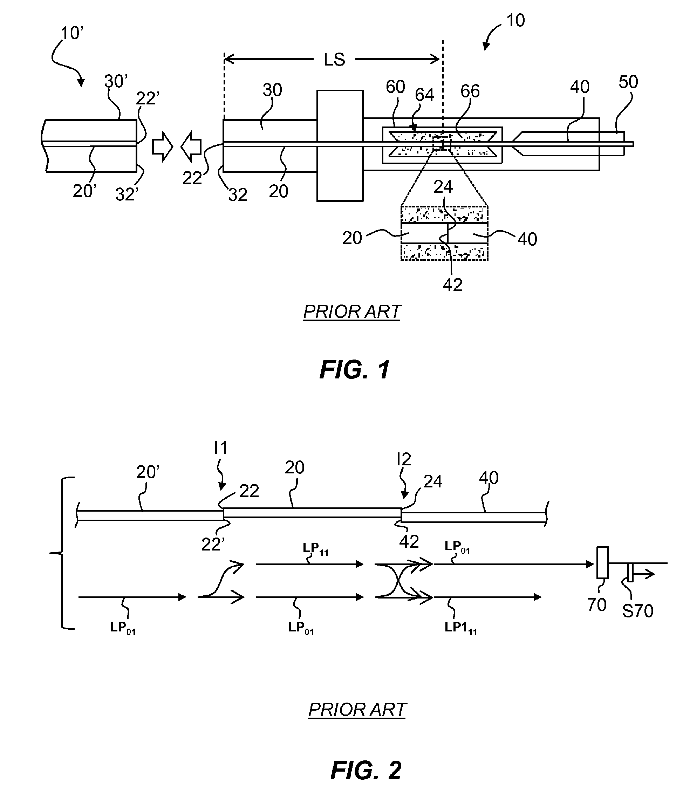

FIG. 1 is a schematic cross-sectional diagram of a conventional example optical fiber connector ("connector") 10, which is based generally on the Unicam® optical fiber connector from Coming, Inc., of Coming, New York. The connector 10 includes a stub fiber 20 that has opposite ends 22 and 24, and that in an example has a length L in the range from 13 mm to 20 mm. The stub fiber 20 is supported by a stub alignment member 30 (e.g., a ferrule), and in an example the stub fiber is secured therein using, for example, an epoxy. The stub alignment member 30 has a straight face or tip 32, which is factory polished so that the corresponding stub fiber end 22 is also polished.

The optical fiber connector 10 also includes a field optical fiber ("field fiber") 40 that has an end 42 and that is operably supported by an alignment member 50, e.g., a ferrule. The stub fiber 20 is optically coupled to field optical fiber 40 by aligning and interfacing the two fibers at their respective ends 24 and 42. This is accomplished, for example, via a mechanical or fusion splice member 60 that includes an interior 64, which in an example contains an index-matching material (e.g., a gel) 66.

FIG. 1 also shows an end portion of a mating connector 10' configured to mate with connector 10. The mating connector 10' can be a stub-fiber type of connector that includes an alignment member 30' that supports a stub fiber 20' having an end 22' at a straight facet 32'. The mating connector 10' can be also a regular connector built on a fiber jumper.

In prior-art types of connectors 10 as shown in FIG. 1, a standard single-mode optical fiber (SMF) is typically used for stub fiber 20. However, as discussed above, SMFs are generally not strictly limited to single-mode operation at the operating wavelengths $\lambda$ of 1310 nm or 1550 nm for a short fiber length of a few centimeters. Under certain conditions (when the SMF length is less than about 5 cm), higher-order modes can propagate in an SMF. Thus, in the discussion below, single mode (SM) fiber 20 is described as having certain attributes of a multimode optical fiber, such as a group index difference $\Delta ng_{SM}$.

For standard SMFs of a few meters in length, the higher-order modes are completely attenuated and so are not observed. However, at lengths significantly shorter, such as those associated with stub fiber 20, an SMF can carry significant power in the higher-order modes. Moreover, for standard SMFs, the group index difference $\Delta n_g$ between the fundamental mode and the higher-order modes can be exceedingly large. As a consequence, the light traveling over the different optical paths in an SMF can interfere, giving rise to the aforementioned detrimental MPI.

FIG. 2 is a close-up view of SM stub fiber 20' of connector 10', SM stub fiber 20 of connector 10, and field fiber 40 of connector 10 in a misaligned configuration that can arise when connectors 10' and 10 of FIG. 1 are mated. The three fibers shown in FIG. 2 are optically coupled at interfaces I1 and I2. In this configuration, stub fiber 20' is the launching fiber and field fiber 40 is the receiving fiber.

The optical fibers 20' and 20 of FIGS. 1 and 2 are shown as being misaligned (offset) relative to one another at interface I1, while optical fibers 20 and 40 are shown as being misaligned relative to one another at interface I2. These misalignments can and do happen in practice.

As shown in the lower half of FIG. 2, the fundamental mode $LP_{01}$ travels in stub fiber 20' of connector 10' toward stub fiber 20. Because stub fibers 20 and 20' are misaligned, the fundamental mode $LP_{01}$ excites a higher-order $LP_{11}$ mode to travel in stub fiber 20, so that now both the fundamental mode $LP_{01}$ and the higher-order mode $LP_{11}$ travel in SM stub fiber 20. When these two modes encounter the misaligned SM field fiber 40, the fundamental $LP_{01}$ mode of stub fiber 20 couples mainly to the fundamental $LP_{01}$ mode of field fiber 40. Some light of the fundamental $LP_{01}$ mode of stub fiber 20 couples also to the higher order $LP_{11}$ mode of field fiber 40. Similarly, the higher order $LP_{11}$ mode of stub fiber 20 couples mainly to the higher order $LP_{11}$ of field fiber 40. Some light of the higher order $LP_{11}$ mode of stub fiber 20 couples also to the fundamental $LP_{01}$ mode of field fiber 40. After propagating a certain length in SM field fiber 40, the $LP_{11}$ mode gets cut off and only the fundamental $LP_{01}$ mode travels therein. Light from the fundamental $LP_{01}$ mode ultimately gets detected, as shown by a photodetector 70 and a corresponding electrical signal S70. Because the $LP_{01}$ and $LP_{11}$ modes from stub fiber 20 have different phases, the power of the excited $LP_{01}$ mode in filed fiber 40 exhibits an oscillation behavior as a function of wavelength due to interference effects. The light associated with the higher order mode $LP_{11}$ is lost.

It is also noted that SM optical fibers that have been used as stub fibers 20 in conventional connectors 10 have been SMFs designed to meet ITU G.652 standards for long-distance transmission in telecommunications systems. However, a stub fiber operates over a decidedly shorter distance and so need not meet this particular standard. Consequently, the fiber 100 disclosed herein for use as a stub fiber is designed to optimize connector performance and is not constrained in performance due to limitations associated with off-the-shelf SMFs that were not designed for use as stub fibers.

**Gradient-index multimode optical fiber**

An aspect of the disclosure is directed to a gradient-index multimode optical fiber that has a $MFD_{MM}$ substantially matched to the single-mode $MFD_{SM}$ of a standard SMF. The gradient-index multimode optical fiber is configured to minimize the mode delay or group index difference $\Delta n_g$ between the fundamental mode $LP_{01}$ and the higher-order modes. Because the MPI period is inversely proportional to the group index difference $\Delta n_g$ between the fundamental mode and higher order modes, adverse MPI effects can be substantially reduced by reducing or minimizing the group index difference. The gradient-index multimode optical fiber disclosed herein can be used in a connector as a stub fiber to reduce insertion loss. In addition, it has the advantage that it can be manufactured using existing multimode fiber production processes.

With reference again to FIG. 2, the amount of optical power transmitted by field fiber 40 depends on the coupling or transmission efficiencies at the two optical fiber interfaces (joints) I1 and I2. The transmission efficiencies are determined by the amount of misalignment (offset) between the two interfacing fibers, their orientation (angle) at the first and second interfaces, and the polarization of light traveling within the fibers. The amount of transmitted optical power also depends on the attenuation of higher-order modes in the fiber over the length of the fiber segment, and the delay between the different modes. A stub fiber can have a length L in the range from 10 mm to 20 mm, with 15 mm to 20 mm being typical.

The transmission efficiency $\eta$ can be expressed mathematically as:

$$\eta = \eta_{01\,01}^{(1)}\eta_{01\,01}^{(2)} + \sum_{l,m}\eta_{01\,lm}^{(1)}\eta_{lm\,01}^{(2)}e^{-\alpha_{lm}L} + \sum_{l,m}2\sqrt{\eta_{01\,01}^{(1)}\eta_{01\,01}^{(2)}\eta_{01\,lm}^{(1)}\eta_{lm\,01}^{(2)}}\,e^{-\frac{\alpha_{lm}}{2}L}\cos\left(\frac{2\pi\Delta n_{lm}L}{\lambda}\right). \quad (1)$$

In most cases the $LP_{11}$ mode is the dominant higher-order mode, in which case:

$$\eta = \eta_{01\,01}^{(1)}\eta_{01\,01}^{(2)} + \eta_{01\,11}^{(1)}\eta_{11\,01}^{(2)}e^{-2\alpha_{11}L} + 2\sqrt{\eta_{01\,01}^{(1)}\eta_{01\,01}^{(2)}\eta_{01\,11}^{(1)}\eta_{11\,01}^{(2)}}\,e^{-\frac{\alpha_{11}}{2}L}\cos\left(\frac{2\pi\Delta n_{11}L}{\lambda}\right), \quad (2)$$

where $\eta_{01\,01}^{(1)}$ is the coupling coefficient of the $LP_{01}$ mode from the launching fiber to the stub fiber, $\eta_{01\,01}^{(2)}$ is the coupling coefficient from the stub fiber to the receiving fiber, $\eta_{01\,lm}^{(1)}$ is the coupling coefficient from the $LP_{01}$ mode to a higher-order mode $LP_{lm}$, $\eta_{lm\,01}^{(2)}$ is the coupling coefficient from the $LP_{lm}$ to the $LP_{01}$ mode at the second joint, $\Delta n_{lm}$ is the effective index difference between the $LP_{lm}$ mode and the $LP_{01}$ mode, $\lambda$ is the operating wavelength of light from a coherent light source (not shown), and $\alpha_{lm}$ is the attenuation coefficient of the $LP_{lm}$ mode and is not to be confused with the $\alpha$ parameter associated with the effective refractive index profile $\Delta$.

From Eq. (2), the transmission efficiency fluctuation can be expressed as:

$$\frac{d\eta}{d\lambda} = \frac{4\pi L}{\lambda^2}\left(\Delta n_{11} - \frac{d\Delta n_{11}}{d\lambda}\right)\sqrt{\eta_{01\,01}^{(1)}\eta_{01\,01}^{(2)}\eta_{01\,11}^{(1)}\eta_{11\,01}^{(2)}}\,e^{-\frac{\alpha_{11}}{2}L}\sin\left(\frac{2\pi\Delta n_{11}L}{\lambda}\right)$$
$$= \frac{4\pi L}{\lambda^2}\Delta n_{g11}\sqrt{\eta_{01\,01}^{(1)}\eta_{01\,01}^{(2)}\eta_{01\,11}^{(1)}\eta_{11\,01}^{(2)}}\,e^{-\frac{\alpha_{11}}{2}L}\sin\left(\frac{2\pi\Delta n_{11}L}{\lambda}\right) \qquad (3)$$

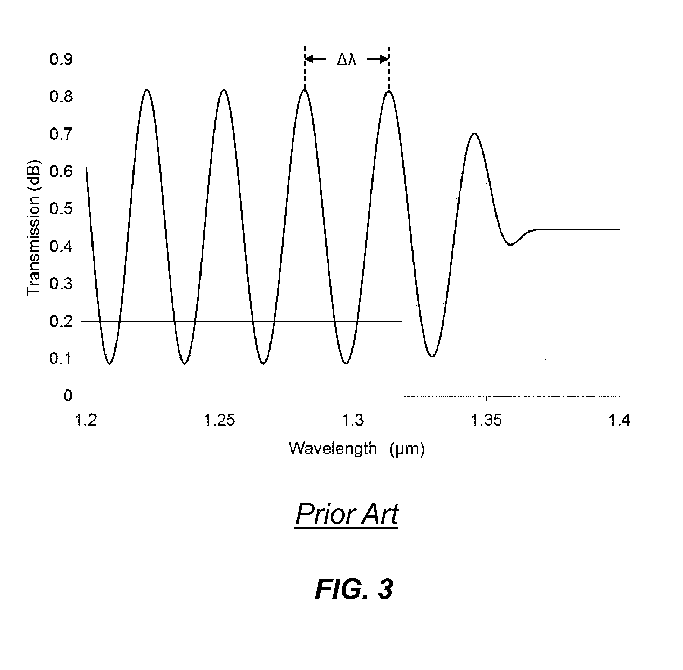

FIG. 3 is a plot of operating $\lambda$ wavelength (microns) versus transmission (dB) and shows an example transmission efficiency of an example conventional stub fiber, with the peak-to-peak wavelength spacing $\Delta\lambda$ of about 32 nm as shown in the plot. From Eq. (3), the peak-to-peak wavelength spacing (i.e., the transmission fluctuation wavelength spacing) can be obtained by the relationship:

$$\Delta\lambda = \lambda^2/(\Delta n_{g11}L), \qquad (4)$$

where $\Delta n_{g11}$ is the group index difference for the $LP_{11}$ mode versus the mode and L is the length of the optical fiber. As a reference, for a stub fiber made of SMF-28e fiber, with a group index difference $\Delta ng_{11} = 0.004$, an operating wavelength $\lambda = 1310$ nm and a length L = 13.3 mm yields the transmission fluctuation wavelength spacing $\Delta\lambda$ of about 32 nm as shown in the plot (for L = 15 mm, $\Delta\lambda$ is about 29 nm). This size transmission fluctuation wavelength spacing $\Delta\lambda$ is relative short and translates into a high probability of MPI occurring over the length of the stub fiber.

In example embodiments, fiber 100 disclosed herein has a length L in the range from 13 mm to 20 mm and has a transmission fluctuation wavelength spacing $\Delta\lambda \geq 50$ nm, and in another example $\Delta\lambda \geq 100$ nm, and in another example, $\Delta\lambda \geq 200$ nm, all at an operating wavelength of $\lambda = 1310$ nm.

More generally, the expression in Eq. (4) can contain $\Delta n_g$, which represents the group index difference between the fundamental mode $LP_{01}$ and an arbitrary higher-order mode. In many instances, the approximation $\Delta n_{g11} \approx \Delta n_g$ is adequate, e.g., when the higher-order mode $LP_{11}$ is the dominant or sole higher-order mode.

Equations (3) and (4) show that there are three main factors that affect the fluctuation in the transmission efficiency: the loss of higher-order modes, the group index difference $\Delta n_g$ and the coupling coefficients $\eta$ at the fiber interfaces. The transmission fluctuation wavelength spacing $\Delta\lambda$ can be made larger by increasing the loss of the higher-order modes, by reducing the group index difference $\Delta n_g$ while optimizing the coupling coefficients, or by a combination of these effects.

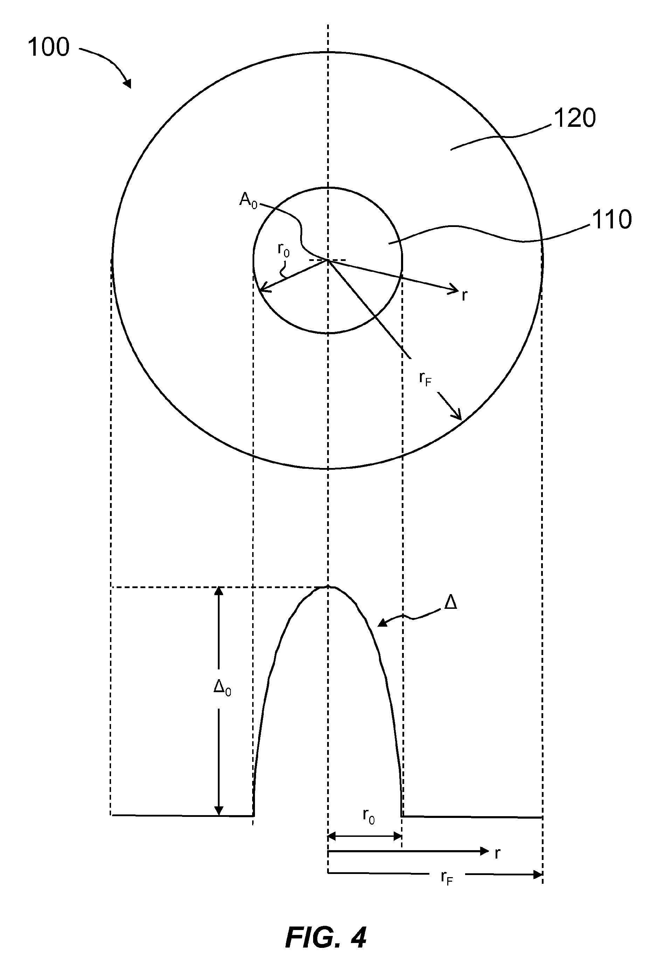

FIG. 4 is a cross-sectional view of an example gradient-index multimode fiber ("fiber") 100 according to one embodiment of the disclosure. Fiber 100 has a core region ("core") 110 having a radius $r_0$ and a cladding region ("cladding") 120 immediately surrounding the core. In an example, core 110 comprises pure silica glass ($SiO_2$) or silica glass with one or more dopants that increases the relative refractive index $\Delta$ in a gradient-index fashion to the maximum $\Delta_0$ at $r = 0$, i.e., on an optical fiber central axis $A_0$, and that monotically decreases to a value $\Delta = 0$ at $r = r_0$. Suitable dopants include $GeO_2$, $Al_2O_3$, $P_2O_5$, $TiO_2$, $ZrO_2$, $Nb_2O_5$, and $Ta_2O_5$, as well as combinations thereof. An example cladding 120 has a uniform (i.e., constant) relative refractive index $\Delta = 0$ out to the cladding outer radius $r_F$.

The fiber 100 disclosed herein has a relatively small group index difference $\Delta n_g$ for reducing MPI, while the MFD is substantially matched to that of SMFs typically used in connectors. Thus, in an example, the key relative refractive index profile parameters ($\Delta_0$, $\alpha$, $r_0$) are selected to minimize the group index difference $\Delta n_g$ (which minimizes the delay between guided modes) and to substantially match the MFD to that of a typical SMF. In an example, fiber 100 has a group index difference $\Delta n_g$ in the range from substantially 0 to $2 \times 10^{-4}$.

In one example, $\Delta_0$ is in the range from 0.4% to 2.5%, while in another example $\Delta_0$ is the range from 0.5% to 2%, and in another example $\Delta_0$ is in the range from 0.7% to 2%. Also in an example, the core size (radius) $r_0$ is in the range from 6 $\mu$m to 20 $\mu$m, while in another example $r_0$ is in the range from 7 $\mu$m to 16 $\mu$m, while in yet another example $r_0$ is in the range from 8 $\mu$m to 16 $\mu$m. Also in an example, the parameter $\alpha$ is in the range from 1.9 to 4.1, while in another example $\alpha$ is in the range from 1.9 to 2.5, while in yet another example $\alpha$ is in the range from 1.95 to 2.15.

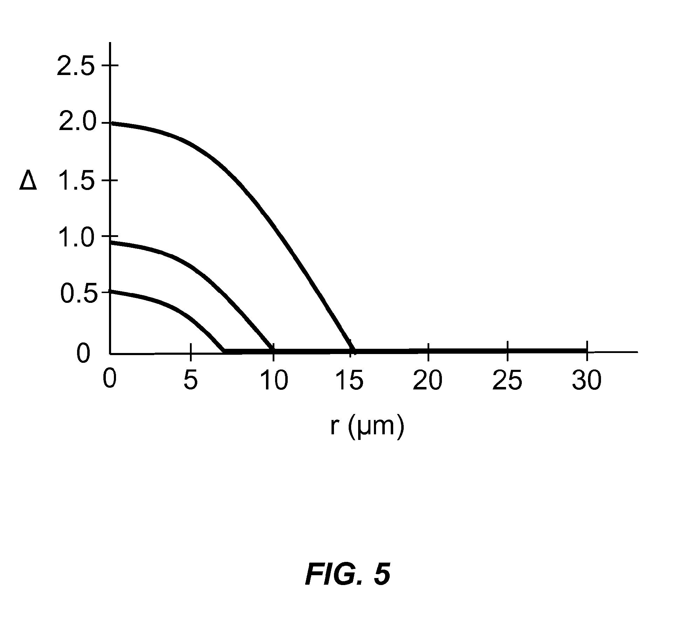

FIG. 5A is a plot of $\Delta(\%)$ vs $r$ ($\mu$m) for three different Design Examples DE 1 through DE 3 for fiber 100. Table 1 below summarizes, for each Design Example, the parameters that minimize the group delay at both 1310 nm and 1550 nm, and that provide a $MFD_{MM}$ that substantially matches the $MFD_{SM}$ of typical single-mode launching and receiving fibers. For a typical SMF, the $MFD_{SM}$ is between 8.2 $\mu$m and 9.7 $\mu$m at 1310 nm, and between 9.2 $\mu$m and 10.9 $\mu$m at 1550 nm. In the table below, $\lambda_C$ is the cut-off wavelength of $LP_{11}$ mode.

| TABLE 1- DESIGN PARAMETERS FOR DE 1 THROUGH DE 3 | | | |
|---|---|---|---|
| PARAMETER | DE 1 | DE 2 | DE 3 |
| $\Delta_0$ | 2% | 0.94% | 0.5% |
| $r_0$ ($\mu$m) | 15.2 | 10.1 | 7.1 |
| $\alpha$ | 2 | 2 | 3.5 |
| $\lambda_C$ ($\mu$m) | > 5000 | 3547 | 2078 |
| $MFD_{MM}$ @ 1310 nm | 9.2 | 9.2 | 9.5 |
| $MFD_{MM}$ @1550 nm | 10.1 | 10.1 | 10.4 |

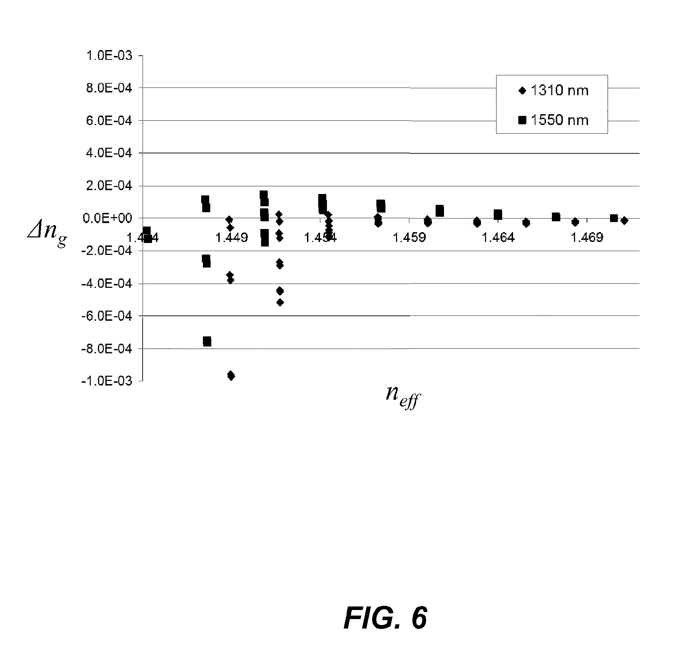

FIG. 6 plots the group index difference $\Delta n_g$ versus the effective index $n_{eff}$ at an operating wavelength $\lambda$ of 1310 nm and 1550 nm for the Design Example DE 1. Design Example DE 1 has a core radius $r_0 = 15.2$ $\mu$m, a maximum relative refractive index $\Delta_0 = 2\%$, and $\alpha = 1.99$. The $MFD_{MM}$ is 9.2 $\mu$m at 1310 nm and 10.1 $\mu$m at 1550 nm. These values of $MFD_{MM}$ are substantially the same as the nominal values of the $MFD_{SM}$ of SMFs used as field fibers, which have MFDs of 9.2 $\mu$m and 10.4 $\mu$m at 1310 nm and 1550 nm, respectively. In an example of fiber 100, at operating wavelengths $\lambda$ of 1310 nm and 1550 nm, mode-field diameter $MFD_{MM}$ satisfies $0.9 \leq MFD_{MM}/MFD_{SM} \leq .1$.

There are 9 mode groups at 1310 nm, and 8 mode groups at 1550 nm. The group index difference $\Delta n_g < 2\times10^{-4}$ for the first 6 mode groups, which is 20 times smaller than the group index difference $\Delta ng_{SM}$ for a typical SMF (when it operates as a multimode fiber), can be achieved for the first 7 mode groups at both 1310 nm and 1550 nm wavelengths. This increases the peak-to-peak transmission fluctuation wavelength spacing $\Delta\lambda$ from 29 nm to 580 nm. For the first two mode groups $LP_{01}$ and $LP_{11}$, which are dominant modes for PI, the the group index difference $\Delta n_g < 2\times10^{-5}$, which is 200 times smaller than the group index difference $\Delta ng_{SM}$ for a typical SMF. This means that MPI effects are much less likely to occur in fiber 100 than in a typical SMF.

Thus, in an example embodiment, the ratio $\Delta ng_{SM}/\Delta n_g$ of the SMF group index difference to the group index difference of fiber 100 is in the range $2 \le \Delta ng_{SM}/\Delta n_g \le 300$, with an exemplary value in this range being $\Delta ng_{SM}/\Delta n_g = 20$, and 200. Thus, in an example, the transmission fluctuation wavelength spacing $\Delta\lambda$, which is inversely proportional to the group index difference (see Eq. 4, above), can be made larger by a factor of between 20 and 200.

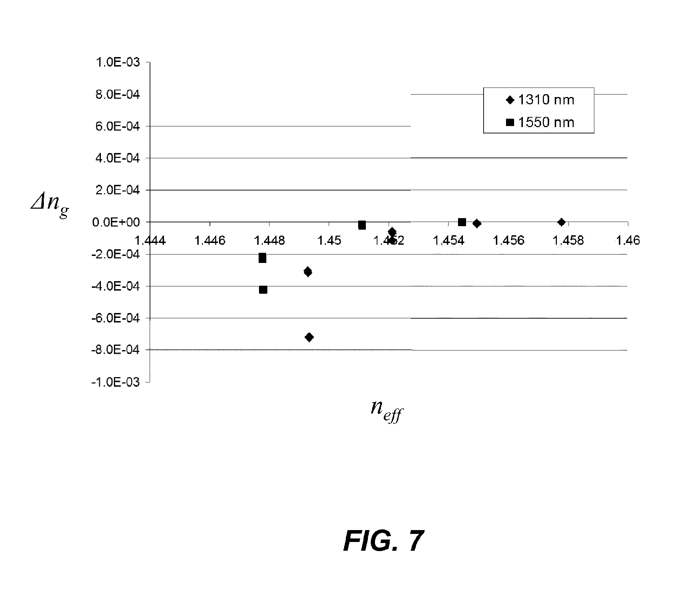

FIG. 7 is the same plot as FIG. 6, but for Design Example DE 2. Design Example DE 2 has a core radius $r_0 = 10.1$ μm, a maximum relative refractive index $\Delta_0 = 0.94\%$, and $\alpha = 2.01$. The $MFD_{MM}$ is 9.2 μm at 1310 nm and 10.1 μm at 1550 nm. There are 5 mode groups at 1310 nm, and 4 mode groups at 1550 nm. The group index $\Delta n_g < 2\times10^{-4}$ (which again is 20 times smaller than that for say SMF-28e fiber), can be achieved for the first 2 to 3 mode groups at both 1310 nm and 1550 nm wavelengths. This increases the peak-to-peak transmission fluctuation wavelength spacing $\Delta\lambda$ from 29 nm to 580 nm in the aforementioned example stub fiber with a length L = 15 mm, and thus mitigates the potential for adverse MPI effects.

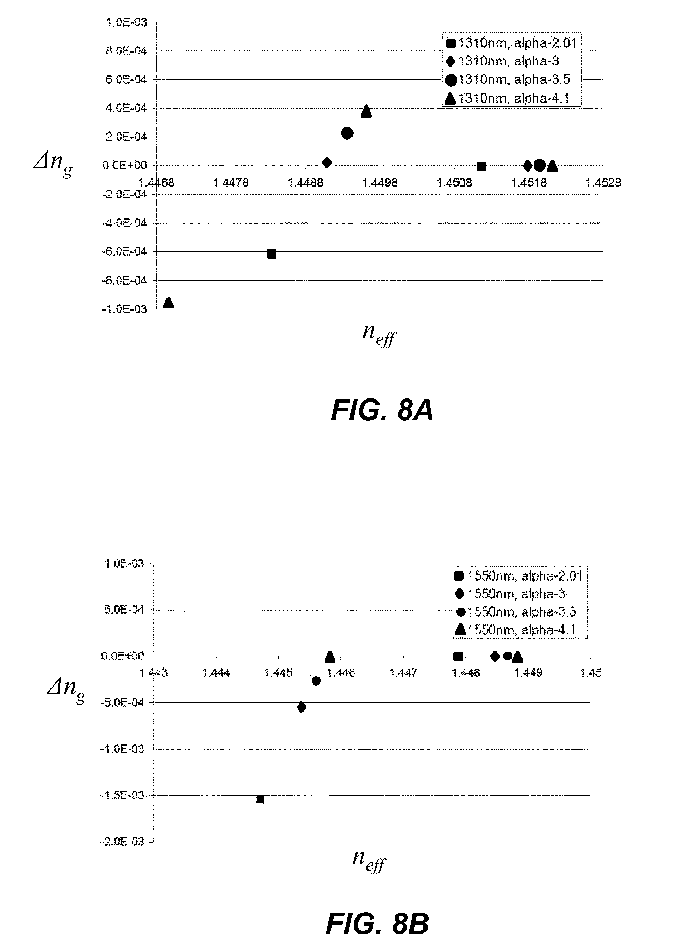

FIG. 8A and FIG. 8B are similar to FIGS. 6 and 7 and show the group index difference $\Delta n_g$ at both 1310 nm and 1550 nm, respectively, for Design Example DE 3. Design Example DE 3 has a core radius $r_0 = 7.1$ μm, a maximum relative refractive index $\Delta_0 = 0.5\%$, and $\alpha = 3.5$. As the core radius decreases, $\Delta n_g$ depends on both $\alpha$ and $r_0$, with the optimum value occurring when $\alpha$ is about 3.5. For a group index difference $\Delta n_g = 3\times10^{-4}$, the transmission fluctuation wavelength spacing $\Delta\lambda$ is over 300 nm, more than 10 times larger than that for SMF-28e fiber. This substantially reduces the amount of MPI that can occur when fiber 100 is used as a stub fiber.

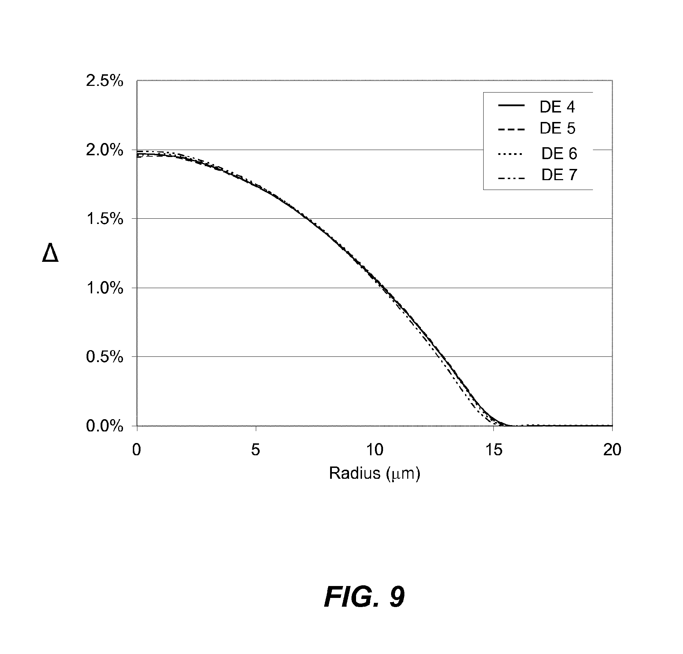

FIG. 9 is a plot similar to the plot of FIG. 4 for four additional Design Examples DE 4 through DE 7 for fiber 100. The four example fibers 100 were made using an outside vapor deposition process. The plot of FIG. 9 shows that all four relative refractive index profiles have a maximum $\Delta$ (i.e., $\Delta_0$) slightly below 2%, with a core radius of about 15 μm. Table 2 below shows the calculated values for the $MFD_{MM}$ and $\Delta n_g$ for each of the four Design Examples DE 4 through DE 7.

| TABLE 2 - DESIGN PARAMETERS FOR DE 4 THROUGH DE 7 | | | | |
|---|---|---|---|---|
| | $MFD_{MM}$ @ 1310 nm (mm) | $MFD_{MM}$ @ 1550 nm (mm) | $\Delta n_g$ @ 1310 nm ($\times10^{-5}$) | $\Delta n_g$ @ 1550 nm ($\times10^{-5}$) |
| DE 4 | 9.2 | 10.0 | 4.9 | 3.4 |
| DE 5 | 9.3 | 10.1 | 4.3 | 2.4 |
| DE 6 | 9.2 | 10.1 | 3.8 | 2.0 |
| DE 7 | 9.1 | 9.9 | 5.3 | 3.4 |

The values for $MFD_{MM}$ for Design Examples DE 4 through DE 7 at 1310 nm range from 9.1 to 9.3 mm, while the values for the $MFD_{MM}$ at 1550 nm range from 9.9 to 10.1 mm. These $MFD_{MM}$ values are very close to the $MFD_{SM}$ value of a standard single mode fiber. The $\Delta n_g$ for Design Examples DE 4 through DE 7 is below $5.3\times10^{-5}$ at 1310 nm, and below $3.4\times10^{-5}$ at 155 nm.

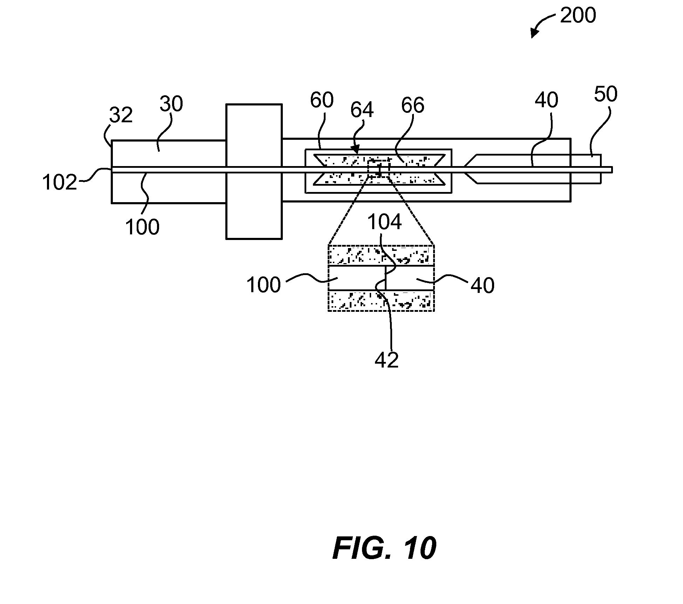

FIG. 10 is similar to FIG. 1 and shows an example embodiment of a connector 200 similar to connector 10, but that includes fiber 100 with opposite ends 102 and 104 serving as a multimode stub fiber. As discussed above, the use of fiber 100 as a stub fiber reduces the adverse effects of MPI. This is because fiber 100 is designed to be compatible with single-mode launch and receive fibers associated with connectors and intentionally supports multiple modes in a manner that reduces adverse MPI effects.

It will be apparent to those skilled in the art that various modifications to the preferred embodiment of the disclosure as described herein can be made without departing from the spirit or scope of the disclosure as defined in the appended claims. Thus, the disclosure covers the modifications and variations provided they come within the scope of the appended claims and the equivalents thereto.

**Claims**

1. A gradient-index, multimode optical fiber for use in an optical fiber connector having an operating wavelength $\lambda$ and a single-mode optical fiber (SMF) that has an mode-field diameter $MFD_{SM}$ and a first group index difference $\Delta ng_{SM}$, comprising:

   a gradient-index core having a radius $r_0$ and a relative refractive index profile $\Delta$ with a maximum relative refractive index $\Delta_0$;
   a cladding immediately surrounding the core, the cladding having a constant relative refractive index profile, wherein the core and cladding support multiple guided modes;
   a mode-field diameter $MFD_{MM}$ that is substantially the same as the SMF mode-field diameter $MFD_{SM}$; and
   a multimode group index difference $\Delta n_g$ such that the ratio $\Delta n_{gSM}/\Delta n_g$ satisfies $2 \leq \Delta ng_{SM}/\Delta n_g \leq 300$.

2. The optical fiber according to claim 1, wherein the core radius $r_0$ is in the range from 6 $\mu$m to 20 $\mu$m, $\Delta_0$ is in the range from 0.4% to 2.5%, $\alpha$ is in the range from 1.9 and 4.1, and the mode-field diameter $MFD_{MM}$ is between 8.7 $\mu$m and 9.7 $\mu$m when the operating wavelength of $\lambda$ = 1310 nm, and is between 9.9 $\mu$m and 10.9 $\mu$m when the operating wavelength $\lambda$ = 1550 nm.

3. The optical fiber according to any one of claims 1 or 2, wherein the multiple modes include a fundamental mode $LP_{01}$ and a first higher-order mode $LP_{11}$, and further comprising a group index difference $\Delta n_{g11} < 2 \times 10^{-3}$ between the $LP_{01}$ and $LP_{11}$ modes for operating wavelengths $\lambda$ of 1310 nm and 1550 nm.

4. The optical fiber according to claim 2, further comprising a transmission fluctuation wavelength spacing defined as $\Delta\lambda = \lambda^2 /(\Delta n_{g11}L)$, wherein L = 15 mm is a length of the optical fiber, and wherein $\Delta\lambda \geq 50$ nm for an operating wavelength $\lambda$ =1310 nm.

5. An optical fiber connector, comprising:

   a multimode stub fiber having a first end and operably supported by a first alignment member, the multimode stub fiber consisting of a length L of the multimode optical fiber according to any one of claims 1-4; and
   a single-mode field optical fiber having a second end and operably supported by a second alignment member relative to the first alignment member such that the respective first and second ends of the multimode stub fiber and the single-mode field optical fiber are operably aligned and interfaced.

6. The optical fiber connector according to claim 5, wherein the length L of the stub fiber is in the range from 15 mm to 20 mm.

7. The optical fiber connector according to any one of claims 5 or 6, further comprising a splicing member configured to operably align and interface the stub fiber and the single-mode field optical fiber.

8. The optical fiber connector according to claim 7, wherein the splicing member further comprises an interior that contains an index-matching material.

9. An optical fiber connector, comprising:

   a single-mode field optical fiber having an end and a mode-field diameter $MFD_{SM}$ and a group index difference $\Delta n_{gSM}$;
   a first alignment member that operably supports the field optical fiber;
   a stub fiber having an end;
   a second alignment member that operably supports the stub fiber so that the stub and field optical fiber ends are aligned and interfaces; and
   wherein the stub fiber consists of a length of a multimode optical fiber that comprises: a) a gradient-index core having a radius $r_0$ and a refractive index profile $\Delta$ with a maximum relative refractive index $\Delta_0$; b) a cladding immediately surrounding the core, the cladding having a constant relative refractive index profile, wherein the core and cladding support multiple guided modes; c) a mode-field diameter $MFD_{MM}$ that is substantially the same as the mode-field diameter $MFD_{SM}$ of the field optical fiber; and d) a multimode group index difference $\Delta n_g$ wherein $2 \leq \Delta n_{gSM}/\Delta n_g \leq 300$.

**10.** The optical fiber connector according to claim 9, wherein the stub fiber length is between 15 mm and 20 mm.

**11.** The optical fiber connector according to any one of claims 9 or 10, wherein the core radius $r_0$ is in the range from 6 $\mu$m to 20 $\mu$m.

**12.** The optical fiber connector according to any one of claims 9-11, wherein $\Delta_0$ is in the range from 0.4% to 2.5%.

**13.** The optical fiber connector according to any one of claims 9-12, wherein the relative refractive index profile has an $\alpha$ parameter in the range from 1.9 to 4.1.

**14.** The optical fiber connector according to any one of claims 9-13, wherein the mode-field diameter $MFD_{MM}$ of the stub fiber is between 8.7 $\mu$m and 9.7 $\mu$m at a first operating wavelength of 1310 nm, and is between 9.9 $\mu$m and 10.9 $\mu$m at a second operating wavelength of 1550 nm.

**15.** A gradient-index multimode stub fiber for use in an optical fiber connector at an operating wavelength and that has a single-mode field optical fiber with a group index difference $\Delta n_{gSM}$ and a mode-field diameter, comprising:

a core having a radius $r_0$ and a relative refractive index $\Delta$ with an $\alpha$ parameter in the range from 1.9 to 4.1; and a cladding immediately surrounding the core and having a constant relative refractive index, the core and cladding configured to support multiple guided modes while having a group index difference $\Delta n_g$ that satisfies $2 \leq \Delta n_{gSM}/\Delta n_g \leq 300$, and a mode-field diameter $MFD_{MM}$ that satisfies $0.9 \leq MFD_{MM}/MFD_{SM} \leq 1.1$ at operating wavelengths $\lambda$ of 1310 nm and 1550 nm.

PRIOR ART

**FIG. 1**

PRIOR ART

**FIG. 2**

*Prior Art*

*FIG. 3*

**FIG. 4**

**FIG. 5**

FIG. 6

**FIG. 7**

**FIG. 8A**

**FIG. 8B**

FIG. 9

**FIG. 10**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61610123 A

**Non-patent literature cited in the description**

- Single Mode Fiber Optics, Jeunhomme. Marcel Dekker, 1990, 39-44